(19) Europäisches Patentamt
European Patent Office
Office européen des brevets

(11) **EP 0 990 320 B1**

(12) **EUROPÄISCHE PATENTSCHRIFT**

(45) Veröffentlichungstag und Bekanntmachung des Hinweises auf die Patenterteilung:
**28.08.2002 Patentblatt 2002/35**

(51) Int Cl.$^7$: **H04B 7/26**

(21) Anmeldenummer: **98936197.7**

(22) Anmeldetag: **17.06.1998**

(86) Internationale Anmeldenummer:
**PCT/DE98/01653**

(87) Internationale Veröffentlichungsnummer:
**WO 98/058464 (23.12.1998 Gazette 1998/51)**

(54) **VERFAHREN ZUR FREQUENZSYNCHRONISATION FÜR EINE MOBILSTATION IN EINEM FUNK-KOMMUNIKATIONSSYSTEM**

FREQUENCY SYNCHRONISATION METHOD FOR A MOBILE STATION IN A MOBILE COMMUNICATIONS SYSTEM

PROCEDE DE SYNCHRONISATION DE FREQUENCE POUR UNE STATION MOBILE DANS UN SYSTEME DE RADIOCOMMUNICATION

(84) Benannte Vertragsstaaten:
**DE ES FI FR GB IT NL SE**

(30) Priorität: **17.06.1997 DE 19725570**

(43) Veröffentlichungstag der Anmeldung:
**05.04.2000 Patentblatt 2000/14**

(73) Patentinhaber: **SIEMENS AKTIENGESELLSCHAFT 80333 München (DE)**

(72) Erfinder:
- **RITTER, Gerhard D-86943 Thaining (DE)**
- **KLEIN, Anja D-80999 München (DE)**

(56) Entgegenhaltungen:
**EP-A- 0 318 684**      **EP-A- 0 788 263**
**WO-A-91/10305**      **WO-A2-96/29791**

**Beschreibung**

Die Erfindung betrifft ein Verfahren zur Frequenzsynchronisation für eine Mobilstation eines Funk-Kommunikationssystems, insbesondere eines TDMA/CDMA Funk-Kommunikationssystems, sowie eine derartig ausgestaltete Mobilstation und eine Basisstation.

In der WO 96/29791 A2 ist ein Verfahren zur Schätzung einer Offset-Frequenz für einen Kohärenzempfänger beschrieben. Im Empfänger werden Referenzwerte innerhalb des Empfangssignales im Basisband mit einer Gruppe von Kanditatenfunktionen korreliert. Ein Spitzenwertdetektor ermittelt den Maximalwert der durchgeführten Korrelationen. Auf diese Weise wird ein Startwert für die geschätzte Frequenz ermittelt.

Der Aufbau von digitalen Funk-Kommunikationssystemen ist in J.Oudelaar, "Evolution towards UMTS", PIMRC 94, 5th IEEE International Symp. on Personal, Indoor and Mobile Radio Communications, The Hague, NL, 18.-22. September 1994, S.852-856, und M.Lenti, H.Hageman, "Paging in UMTS", RACE Mobile Telecommunications Workshop, Vol. 1, Amsterdam, NL, 17.-19. Mai 1994, S.405-410, gezeigt.

Das gegenwärtig existierende Mobilfunksystem GSM (Global System for Mobile Communications) ist ein Funk-Kommunikationssystem mit einer TDMA-Komponente zur Teilnehmerseparierung (time division multiple access). Gemäß einer Rahmenstruktur werden Nutzinformationen der Teilnehmerverbindungen in Zeitschlitzen übertragen. Die Übertragung erfolgt blockweise. Aus dem GSM-Mobilfunksystem sind in Abwärtsrichtung weiterhin dem Zeitraster der Rahmenstruktur angepaßte Frequenzkanäle (FCCH frequency correction channel) zur Frequenzsynchronisation für die Mobilstationen bekannt. In diesem Frequenzkanal kann eine Mobilstation zur Selbstsynchronisation einen Sinusträger auswerten. Eine Frequenzsynchronisation mittels eines Sinusträgers ist beispielsweise aus der WO 91 10305 A bekannt.

Eine Zeitsynchronisation von Zeitschlitzen in einem TDMA-Funkkommunikationssystem ist aus EP 0 318 684 bekannt. Aus D1 ist ein Verfahren zur Zeitsynchronisation für eine Mobilstation bekannt. Der Funküber-tragungskanal weist eine Signallaufzeit zwischen Basisstation und Mobilstation auf, die proportional zur Entfernung zwischen Mobilstation und Basisstation ist. Zusätzlich kann auf Grund von Reflexionen die Signallaufzeit zeitlich stark variieren. Durch die Signallaufzeit werden die von der Mobilstation empfangenen Signale zeitlich unterschiedlich stark verzögert. Diese Signalverzögerung zwischen dem gesendeten Signal und dem empfangenen Signal wird als "phase error" bezeichnet. Die Kompensation dieser Signalverzögerung ist Gegenstand des Verfahrens zur Zeitsynchronisation. Die Signalverzögerung ist dabei konstant innerhalb eines TDMA Zeitschlitzes.

Aus DE 195 49 148.3 ist ein Mobil-Kommunikationssystem bekannt, das eine TDMA/CDMA-Teilnehmerseparierung (CDMA code division multiple access) nutzt und empfangsseitig ein JD-Verfahren (joint detection) anwendet, um unter Kenntnis von Spreizkodes mehrerer Teilnehmer eine verbesserte Detektion der übertragenen Nutzinformationen vorzunehmen. In einem Frequenzkanal (TCH traffic channel) werden gleichzeitig Informationen mehrerer Nutzdatenverbindungen übertragen, die durch ihren Spreizkode unterscheidbar sind. Durch die Einteilung von bestimmten Frequenzkanälen für Synchronisationszwecke entsteht jedoch ein großer Kapazitätsverlust gegenüber dem GSM-System, da der für einen Frequenzkanal genutzte Frequenzbereich breitbandiger ist.

Der Erfindung liegt die Aufgabe zugrunde, ein Verfahren und Vorrichtungen bereitzustellen, die in einem Funk-Kommunikationssystem die Frequenzsynchronisation bei geringem Verbrauch funktechnischer Ressourcen ermöglichen. Diese Aufgabe wird durch das Verfahren mit den Merkmalen des Patentanspruchs 1, die Mobilstation mit den Merkmalen des Patentanspruchs 9 und die Basisstation mit den Merkmalen des Patentanspruchs 10 gelöst. Weiterbildungen der Erfindung sind den Unteransprüchen zu entnehmen.

Ein Funk-Kommunikationssystem stellt durch Zeitschlitze und durch breitbandige Frequenzbereiche gebildete Frequenzkanäle bereit, in denen gleichzeitig Informationen mehrerer Verbindungen zwischen Mobilstationen und einer Basisstation übertragen werden, wobei die Informationen unterschiedlicher Verbindungen gemäß einer verbindungsindividuellen Feinstruktur unterscheidbar sind. Die unterschiedlichen Verbindungen können auch durch mehrere Kodes gebildet sein, die einer einzigen Mobilstation zugeordnet sind.

Erfindungsgemäß werden für die Mobilstationen in Abwärtsrichtung zeitlich wiederkehrend Frequenzkanäle zur Frequenzsynchronisation bereitgestellt, in denen eine Symbolfolge übertragen wird. Die zu synchronisierende Mobilstation bestimmt aus empfangenen Signalen Schätzwerte für die Symbolfolge und vergleicht diese Schätzwerte mit einer Vergleichsfolge. Somit kann eine Phasendrift der Schätzwerte bezüglich der Vergleichsfolge berechnet werden. Aus der Phasendrift wird ein Frequenzoffset bestimmt, der zur Frequenzsynchronisation benutzt wird.

Indem eine Phasendrift gemäß dem Vergleich berechenbar ist, ergibt sich die Möglichkeit, den Frequenzoffset der zu synchronisierenden Mobilstation bezüglich des Trägers des Frequenzkanals einfach zu bestimmen. Ein ausreichend große und entsprechend verteilte Anzahl von Abtastwerten ist hinreichend für den Vergleich. Damit läßt sich die Frequenzsynchronisation mit anderen Maßnahmen zur Synchronisation der Mobilstation verbinden, so daß der Verbrauch funktechnischer Ressourcen gering bleibt.

Vorteilhafterweise wird die Symbolfolge zusätzlich zu Informationen weiterer Verbindungen übertragen. Auch dadurch können die funktechnischen Ressourcen der Funkschnittstelle zwischen Basisstation und Mobilstationen besser genutzt werden. Durch die Unterscheidbarkeit von Informationen entsprechend einer aufgeprägten Feinstruktur wird ein Zeitschlitz nicht allein durch die Synchronisation blockiert, sondern kann vielfältig genutzt werden. Die weiteren Verbindungen sind dabei Nutzdaten- oder Signalisierungsverbindungen.

Gemäß einer Ausgestaltung der Erfindung wird die Symbolfolge derart übertragen, daß zumindest zwei Schätzwerte in für die Phasendriftberechnung ausreichend großem zeitlichen Abstand gewonnen werden. Es ist folglich nicht notwendig, daß die Symbolfolge eine durchgängige Folge ist. Es können einzelne oder Gruppen von Symbolen innerhalb weiterer bekannter oder unbekannter zu übertragender Symbole sein. Die Symbole können über die Zeitdauer eines Zeitschlitzes andauern oder zusätzlich zu Trainingssequenzen bzw. Symbolen für andere Abstimmungszwecke gesendet werden.

Die Symbolfolge wird vorteilhafterweise mit einem individuellen Spreizkode gespreizt, wobei im Spreizkode die Information über das Vorliegen einer Symbolfolge zur Zeitsynchronisation enthalten sein kann. Die Symbolfolge kann auch als eine Folge von Chips aufgefaßt werden, die eine den Frequenzbereich ausfüllende Bandbreite erzeugen. Indem der Funkblock mit den Angaben zur Zeitsynchronisation gemeinsam mit den übrigen Funkblöcken durch Entspreizung verarbeitbar ist, entfällt ein zusätzlicher Verarbeitungsaufwand beim Empfänger.

Nach einer weiteren Ausprägung der Erfindung wird die Phasendrift als ein Proportionalitätsfaktor gemäß der Methode der kleinsten Fehlerquadrate aus dem Vergleich der Schätzwerte mit der Vergleichsfolge berechnet. Es wird ein linearer Zusammenhang zwischen Schätzwerten und Vergleichsfolge, also ein in etwa konstanter Frequenzoffset vorausgesetzt. Dies ist bei den hohen Genauigkeiten des Frequenznormal in den Mobilstation gegeben.

Es ist vorteilhaft, zumindest Teile der Symbolfolge sowohl für die Zeit-, als auch für die Frequenzsynchronisation zu nutzen. So kann anhand einer Symbolfolge, beispielsweise durch Korrelation, der zeitliche Bezug der Übertragung innerhalb eines Zeitschlitzes und zusätzlich der Frequenzbezug durch Phasendriftbestimmung hergestellt werden. Damit muß zur Synchronisation nur eine geringe Netzkapazität abgestellt werden.

Im folgenden wird die Erfindung anhand eines Ausführungsbeispiels bezugnehmend auf zeichnerische Darstellungen näher erläutert.

Dabei zeigen

FIG 1    ein Blockschaltbild eines Mobilfunknetzes,

FIG 2    eine schematische Darstellung der Rahmenstruktur der Funkübertragung,

FIG 3    eine schematische Darstellung der Struktur eines Frequenzkanal zur Frequenzsynchronisation, und

FIG 4    Blockschaltbilder von Mobilstation und Basisstation und der Funkübertragung in Abwärtsrichtung.

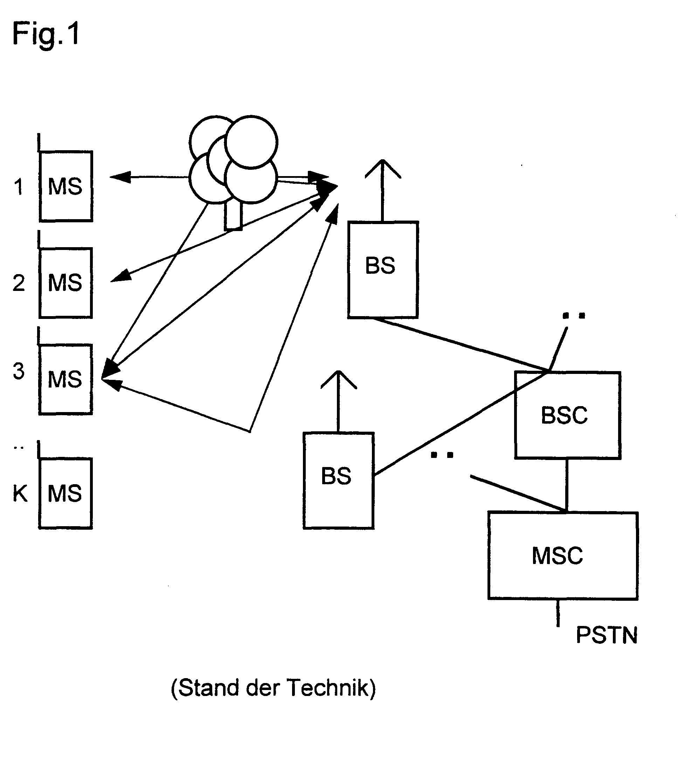

Das in FIG 1 dargestellte Funk-Kommunikationssystem entspricht in seiner Struktur einem bekannten GSM-Mobilfunknetz, das aus einer Vielzahl von Mobilvermittlungsstellen MSC besteht, die untereinander vernetzt sind bzw. den Zugang zu einem Festnetz PSTN herstellen. Weiterhin sind diese Mobilvermittlungsstellen MSC mit jeweils zumindest einem Basisstationscontroller BSC verbunden. Jeder Basisstationscontroller BSC ermöglicht wiederum eine Verbindung zu zumindest einer Basisstation BS. Eine solche Basisstation BS ist eine Funkstation, die über eine Funkschnittstelle eine Nachrichtenverbindung zu Mobilstationen MS aufbauen kann.

In FIG 1 sind beispielhaft drei Verbindungen zur Übertragung von Nutzinformationen und Signalisierungsinformationen zwischen drei Mobilstationen MS und einer Basisstation BS dargestellt. Ein Operations- und Wartungszentrum OMC realisiert Kontroll- und Wartungsfunktionen für das Mobilfunknetz bzw. für Teile davon. Die Funktionalität dieser Struktur ist auf andere Funk-Kommunikationssysteme übertragbar, in denen die Erfindung zum Einsatz kommen kann.

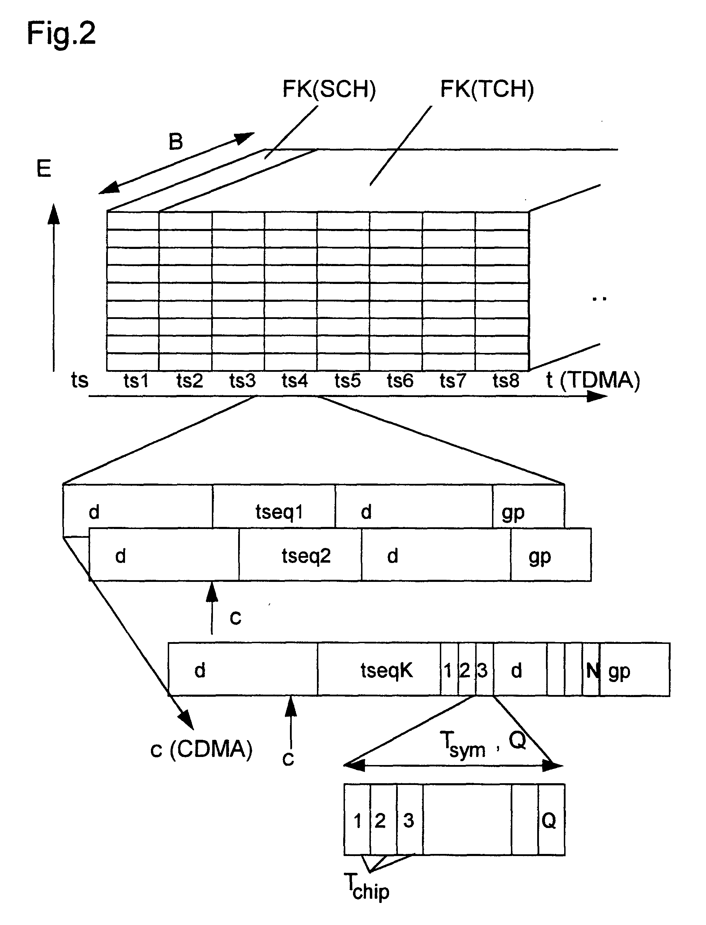

Die Rahmenstruktur der Funkübertragung ist aus FIG 2 ersichtlich. Gemäß einer TDMA-Komponente ist eine Aufteilung eines breitbandigen Frequenzbereiches, beispielsweise der Bandbreite B = 1,6 MHz, in mehrere Zeitschlitze ts, beispielsweise 8 Zeitschlitze ts1 bis ts8 vorgesehen. Jeder Zeitschlitz ts innerhalb des Frequenzbereiches B bildet einen Frequenzkanal FK. Innerhalb der Frequenzkanäle TCH, die allein zur Nutzdatenübertragung vorgesehen sind, werden Informationen mehrerer Verbindungen in Funkblöcken übertragen.

Diese Funkblöcke zur Nutzdatenübertragung bestehen aus Abschnitten mit Daten d, in denen Abschnitte mit empfangsseitig bekannten Trainingssequenzen tseq1 bis tseqK eingebettet sind. Die Daten d sind verbindungsindividuell mit einer Feinstruktur, einem Teilnehmerkode c, gespreizt, so daß empfangsseitig beispielsweise K Verbindungen durch diese CDMA-Komponente separierbar sind.

Die Spreizung von einzelnen Symbolen der Daten d bewirkt, daß innerhalb der Symboldauer $T_{sym}$ Q Chips der Dauer $T_{chip}$ übertragen werden. Die Q Chips bilden dabei den verbindungsindividuellen Teilnehmerkode c. Weiterhin ist innerhalb des Zeitschlitzes ts eine Schutzzeit gp zur Kompensation unterschiedlicher Signalaufzeiten der Verbindungen vorgesehen.

Innerhalb eines breitbandigen Frequenzbereiches B werden die aufeinanderfolgenden Zeitschlitze ts nach einer Rahmenstruktur gegliedert. So werden acht Zeitschlitze ts zu einem Rahmen zusammengefaßt, wobei beispielsweise ein Zeitschlitz des Rahmens einen Frequenzkanal TCH zur Nutzdatenübertragung bildet und wiederkehrend von einer Gruppe von Verbindungen genutzt wird. Ein Frequenzkanal FCCH zur Frequenzsynchronisation der Mobilstationen MS wird nicht in jedem Rahmen, jedoch zu einem vorgegebenen Zeitpunkt innerhalb eines Multirahmens eingeführt. Die Abstände zwischen den Frequenzkanälen FCCH zur Frequenzsynchronisation bestimmen die Kapazität, die das Mobilfunknetz dafür zur Verfügung stellt.

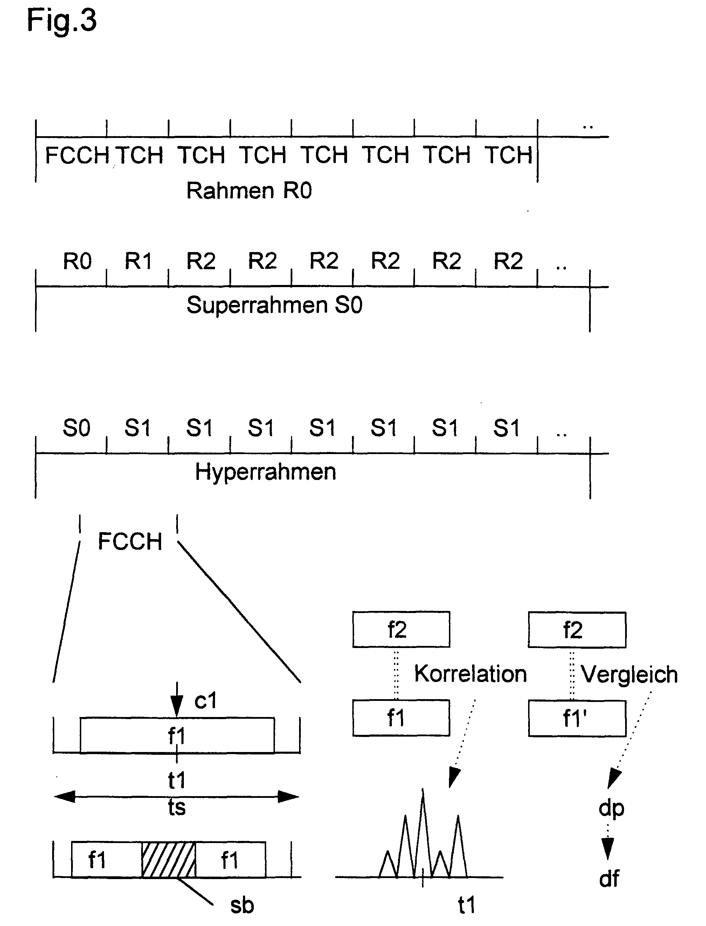

Anhand von FIG 3 wird die Struktur eines Frequenzkanals FCCH zur Frequenzsynchronisation gezeigt. Der breitbandige Frequenzbereich B im Frequenzband eines Organisationskanals der entsprechenden Zelle des Mobilfunknetzes ist Teil eines Rahmens R0, der einen Frequenzkanals FCCH zur Frequenzsynchronisation (in dem jedoch auch weitere Signalisierungs- und Nutzdatenverbindungen abgewikkelt werden) und in den folgenden Zeitschlitzen ausschließlich Frequenzkanäle TCH zur Nutzdaten- oder Signalisierungsübertragung enthält.

Dieser Rahmen R0 ist wiederum Teil eines Superrahmens S0, der außer dem Rahmen R0 einen Rahmen R1 mit Frequenzkanälen FK mit weiteren zellenbezogenen Informationen und Rahmen R2 mit Nutzdaten umfaßt. Ein Hyperrahmen enthält wiederum mehrere Superrahmen S0, S1, von denen zumindest einer einen Frequenzkanal FCCH zur Frequenzsynchronisation beinhaltet.

In einem Zeitschlitz ts des Frequenzkanals FCCH zur Frequenzsynchronisation wird eine Symbolfolge f1 in Abwärtsrichtung übertragen, die in den Mobilstationen MS als Vergleichsfolge f2 bekannt ist. Die Symbolfolge f1 ist mit einem individuellen Kode c1 gespreizt.

Eine alternative Ausführungsform für die Symbolfolge f1 sieht vor, daß Teile der Symbolfolge f1 als Synchronisationsblock sb zur Zeitsynchronisation genutzt werden. Dieser Synchronisationsblock sb ist in der Mitte des Zeitschlitzes ts angeordnet. Die Symbolfolge f1 wird von der Basisstation BS mit einer Sendeleistung abgestrahlt, die im Sinne einer Leistungsregelung an die Empfangsleistungen der übrigen bestehenden Verbindungen angepaßt ist.

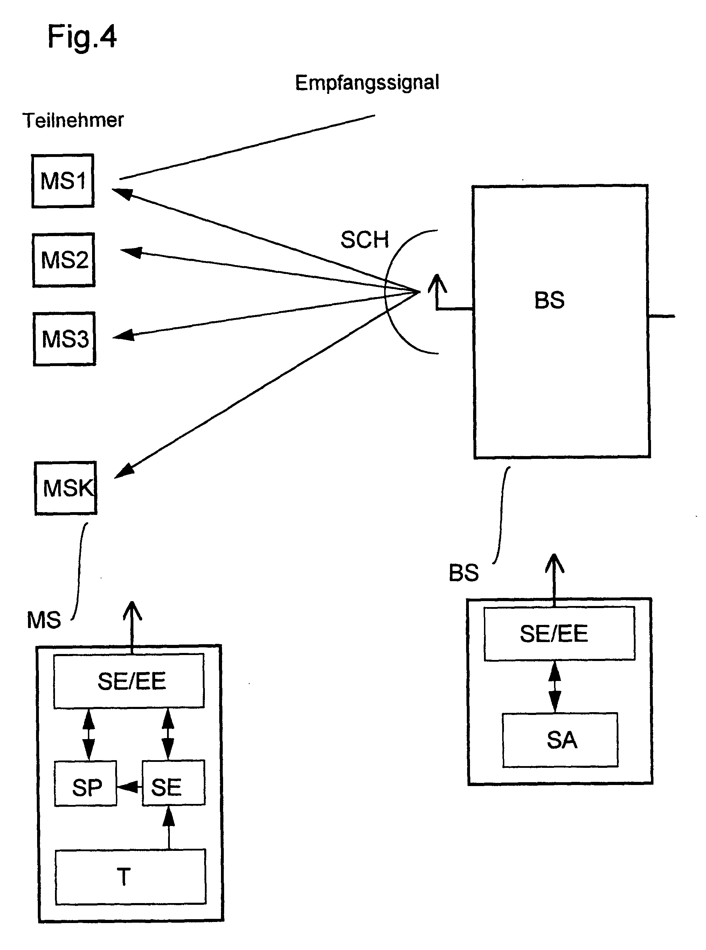

Empfangsseitig wird zur Frequenzsynchronisation eine Auswertung der in Abwärtsrichtung übertragenen Informationen durchgeführt. FIG 4 zeigt die Funkübertragung in Abwärtsrichtung von der Basisstation BS zu Mobilstationen MS1 bis MSK. Die Mobilstationen MS bestimmen zuerst einen oder mehrere Frequenzbereiche B mit einer ausreichend hohen oder maximalen Empfangsleistung. Dies sind im allgemeinen die Frequenzbereiche B der nächstliegenden Basisstation BS, in deren Zelle sich die Mobilstation MS momentan befindet.

Mobilstationen MS1 bis MSK werten in diesen Frequenzbereichen B Empfangssignale aus und führen eine ständige Korrelation der Werte des Empfangssignals mit der Vergleichsfolge f2 durch. Bei ausreichend großer Korrelation wird der bestimmte Zeitpunkt t1 des Eintreffens der Symbolfolge f1 als Bezugspunkt für die Zeitsynchronisation gewählt und eine interne Zeitreferenz der Mobilstation MS abgeglichen.

Gleichzeitig werden aus den Empfangssignalen Schätzwerte f1' für die Symbolfolge f1 bestimmt. Daraufhin wird ein Gleichungssystem aufgestellt, das die Schätzwerte f1' den Werten der Vergleichsfolge f2 gegenüberstellt, die der Symbolfolge f1 entspricht. Durch eine Berechnung mit Hilfe der Methode der kleinsten Fehlerquadrate oder eines anderen Lösungsverfahrens wird ein Proportionalitätsfaktor bestimmt, der eine Phasendrift dp der Schätzwerte f1' bezüglich der Vergleichsfolge f2 repräsentiert.

Aus der Phasendrift dp wird entsprechend der Beziehung:

$$dp = e^{j2\pi \cdot df \cdot t}$$

ein Frequenzoffset df abgeleitet, wobei t die Zeit darstellt.

Mit diesem Frequenzoffset df des internen Frequenznormals zur Trägerfrequenz des Frequenzbereichs B des Frequenzkanals FCCH zur Frequenzsynchronisation wird das interne Frequenznormal vorzeichenrichtig beaufschlagt und dadurch die Frequenzsynchronisation durchgeführt.

Die Basisstation BS enthält eine Sende/Empfangseinrichtung SE/EE, die abzustrahlende Sendesignale digital/analog wandelt, vom Basisband in den Frequenzbereich B der Abstahlung umsetzt und die Sendesignale moduliert und verstärkt. Eine Signalerzeugungseinrichtung SA hat zuvor die Sendesignale, beispielsweise die Symbolfolge f1, zusammengestellt und den entsprechenden Frequenzkanälen FCCH, TCH zugeordnet.

Die Mobilstation MS enthält ein Bedienfeld T, eine Signalverarbeitungseinrichtung SP, eine Steuereinrichtung SE und eine Sende/Empfangseinrichtung SE/EE. Am Bedienfeld T kann der Teilnehmer Eingaben vornehmen, u.a. eine Eingabe zum Aktivieren der Mobilstation MS, die daraufhin als erstes eine Synchronisation auf das sie umgebende Mobilfunknetz durchführen muß.

Die Steuereinrichtung SE nimmt diese Anforderung auf und veranlaßt die Signalverarbeitungseinrichtung SP über die Sende/Empfangseinrichtung SE/EE empfangene Empfangssignale daraufhin auszuwerten, daß, wie bereits zuvor beschrieben, der entsprechende Frequenzbereich B ausgewählt wird und eine Korrelation bis zum erfolgreichen Auffinden der Symbolfolge f1 durchgeführt wird. Anschießend findet die beschriebene Zeit- und Frequenzsynchronisation statt.

Zur Signalverarbeitung werden die Empfangssignale in Symbole mit diskretem Wertevorrat umgewandelt, beispielsweise digitalisiert. Die Signalverarbeitungseinrichtung SP, die als digitaler Signalprozessor einen JD-Prozessor zum Detektieren der Nutzinformationen und der Signalisierungsinformationen nach dem JD-CDMA-Verfahren (joint detection) enthält, wertet auch die Symbolfolge f1 aus.

## Patentansprüche

1. Verfahren zur Frequenzsynchronisation für eine Mobilstation (MS) eines Funk-Kommunikationssystems,
   wobei das Funk-Kommunikationssystem durch Zeitschlitze (ts) und durch breitbandige Frequenzbereiche (B) gebildete Frequenzkanäle (FK) bereitstellt, in denen gleichzeitig Informationen einer oder mehrerer Verbindungen zwischen Mobilstationen (MS) und einer Basisstation (BS) übertragen werden, und
   wobei die Informationen unterschiedlicher Verbindungen mittels Spreizkodes unterscheidbar sind,
   bei dem

   - für die Mobilstationen (MS) in Abwärtsrichtung wiederkehrend ein Frequenzkanal (FCCH) zur Frequenzsynchronisation bereitgestellt wird,
   - innerhalb des Frequenzkanals (FCCH) eine Chipfolge (f1) übertragen wird,
   - von der zu synchronisierenden Mobilstation (MS) aus empfangenen Signalen Schätzwerte (f1') für die Chipfolge (f1) bestimmt werden,
   - aus mindestens einem Vergleich der Schätzwerte (f1') mit einer Vergleichsfolge (f2) eine Phasendrift (dp) der Schätzwerte (f1') berechnet wird,
   - aus der Phasendrift (dp) ein Frequenzoffset (df) bestimmt wird, und
   - von der Mobilstation (MS) der Frequenzoffset zur Frequenzsynchronisation benutzt wird.

2. Verfahren nach Anspruch 1, bei dem die Chipfolge (f1) gleichzeitig mit zu übertragenden Informationen von Nutzdaten- oder Signalisierungsverbindungen gesendet wird.

3. Verfahren nach einem der vorherigen Ansprüche, bei dem die Chipfolge (f1) derart übertragen wird, daß zumindest zwei Schätzwerte (f1') in für die Phasendriftberechnung ausreichend großem zeitlichen Abstand gewonnen werden können.

4. Verfahren nach einem der vorherigen Ansprüche, bei dem die Chipfolge (f1) mit einem individuellen Spreizkode (c1) gespreizt wird.

5. Verfahren nach einem der vorherigen Ansprüche, bei dem die Phasendrift (dp) als ein Proportionalitätsfaktor gemäß der Methode der kleinsten Fehlerquadrate aus dem Vergleich der Schätzwerte (f1') mit der Vergleichsfolge (f2) berechnet wird.

6. Verfahren nach einem der vorherigen Ansprüche, bei dem zumindest Teile der Chipfolge (f1) zur Zeit- und Frequenzsynchronisation verwendet wird.

7. Verfahren nach einem der vorherigen Ansprüche, bei dem eine Separierung der Signale in einem Frequenzkanal (FK) mit einem JD-CDMA Verfahren erfolgt.

8. Verfahren nach einem der vorherigen Ansprüche, bei dem von der Mobilstation (MS) der Frequenzbereich (B) mit dem Frequenzkanal (FCCH) zur Frequenzsynchronisation gemäß einer Empfangsleistungsmessung ausgewählt wird.

9. Mobilstation (MS) zur Durchführung des Verfahrens nach Anspruch 1,
   mit einer Signalverarbeitungseinrichtung (SP)

   - zum Bestimmen von Schätzwerten (f1') für die Chipfolge (f1) aus empfangenen Signalen,
   - zum Vergleichen der Schätzwerte (f1') mit einer Vergleichsfolge (f2),
   - zum Berechnen eines Frequenzoffset (df) aus dem Vergleich, und

   mit einer Steuereinrichtung (SE)
   zur Frequenzsynchronisation unter Berücksichtigung des Frequenzoffsets (df).

## Claims

1. Frequency synchronization method for a mobile station (MS) of a radio communications system, the radio communications system providing frequency channels (FK) which are formed by time slots (ts) and by broadband frequency ranges (B) and in which information from one or more connections is transmitted simultaneously between mobile stations (MS) and a base station (BS), and it being possible to distinguish the information from different connections by means of a spread code, in which

   - a frequency channel (FCCH) is repeatedly provided for frequency synchronization for the mobile stations (MS) in the downward direction,
   - a chip sequence (fl) is transmitted within the frequency channel (FCCH),
   - estimated values (f1') for the chip sequence (fl) are determined from received signals by the mobile station (MS) to be synchronized,
   - a phase drift (dp) in the estimated values (fl') is calculated from at least one comparison of the estimated values (f1') with a reference sequence (f2),

- a frequency offset (df) is determined from the phase drift (dp), and
- the frequency offset is used by the mobile station (MS) for frequency synchronization.

**2.** Method according to Claim 1, in which the chip sequence (f1) is transmitted simultaneously with information to be transmitted from user data connections or signalling connections.

**3.** Method according to one of the preceding claims, in which the chip sequence (f1) is transmitted in such a way that at least two estimated values (f1') can be obtained in a temporal spacing sufficiently large for calculating the phase drift.

**4.** Method according to one of the preceding claims, in which the chip sequence (f1) is spread with the aid of an individual spread code (c1).

**5.** Method according to one of the preceding claims, in which the phase drift (dp) is calculated as a proportionality factor in accordance with the method of least error squares from the comparison of the estimated values (f1') with the reference sequence (f2).

**6.** Method according to one of the preceding claims, in which at least parts of the chip sequence (f1) are used for time synchronization and frequency synchronization.

**7.** Method according to one of the preceding claims, in which the signals are separated in a frequency channel (FK) using a JD-CDMA method.

**8.** Method according to one of the preceding claims, in which the frequency range (B) with the frequency channel (FCCH) for frequency synchronization is selected by the mobile station (MS) in accordance with a measurement of receiver power.

**9.** A mobile station (MS) for carrying out the method according to Claim 1, having a signal processing device (SP)

- for determining estimated values (f1') for the chip sequence (f1) from received signals,
- for comparing the estimated values (f1') with a reference sequence (f2),
- for calculating a frequency offset (df) from the comparison, and

having a control device (SE) for frequency synchronization taking account of the frequency offset (df).

**Revendications**

**1.** Procédé de synchronisation de fréquence pour une station mobile (MS) d'un système de radiocommunication,

le système de radiocommunication mettant à disposition des canaux de fréquences (FK) constitués de créneaux temporels (ts) et de gammes de fréquences (B) à large bande, dans lesquels sont transmises simultanément des informations d'une ou de plusieurs liaisons entre des stations mobiles (MS) et une station de base (BS), et

les informations de différentes liaisons étant différenciables au moyen de codes d'extension,

consistant

- à mettre à disposition des stations mobiles (MS), périodiquement dans le sens descendant, un canal de fréquences (FCCH) pour la synchronisation de fréquence,
- à transmettre une séquence d'éléments (f1) dans le canal de fréquences (FCCH),
- à déterminer par la station mobile (MS) à synchroniser, à partir de signaux reçus, des valeurs estimatives (f1') pour la séquence d'éléments (f1),
- à calculer à partir d'au moins une comparaison des valeurs estimatives (f1') avec une séquence de référence (f2), une variation de phase (dp) des valeurs estimatives (f1'),
- à déterminer à partir de la variation de phase (dp) un décalage de fréquence (df) et
- à utiliser par la station mobile (MS) le décalage de fréquence (df) pour la synchronisation de fréquence.

**2.** Procédé selon la revendication 1, dans lequel la séquence d'éléments (f1) est émise en même temps que des informations à transmettre de liaisons réservées aux données utiles ou à la signalisation.

**3.** Procédé selon l'une quelconque des revendications précédentes, dans lequel la séquence d'éléments (f1) est transmise de manière à pouvoir obtenir au moins deux valeurs estimatives (f1') dans un intervalle de temps suffisant pour calculer la variation de phase.

**4.** Procédé selon l'une quelconque des revendications précédentes, dans lequel la séquence d'éléments (f1) est étendue à l'aide d'un code d'extension (c1) individuel.

**5.** Procédé selon l'une quelconque des revendications précédentes, dans lequel la variation de phase (dp) est calculée en tant que coefficient de proportionnalité selon la méthode des moindres carrés à partir de la comparaison des valeurs estimatives (f1') avec la séquence de référence (f2).

6.  Procédé selon l'une quelconque des revendications précédentes, dans lequel au moins des parties de la séquence d'éléments (f1) sont utilisées pour la synchronisation de temps et de fréquence.

7.  Procédé selon l'une quelconque des revendications précédentes, dans lequel une séparation des signaux dans un canal de fréquences (FK) est effectuée à l'aide d'un procédé JD-CDMA.

8.  Procédé selon l'une quelconque des revendications précédentes, dans lequel la gamme de fréquences (B) avec le canal de fréquences (FCCH) pour la synchronisation de fréquence est sélectionnée par la station mobile (MS) suivant une mesure de la puissance de réception.

9.  Station mobile (MS) pour la mise en oeuvre du procédé selon la revendication 1,
    comprenant un dispositif de traitement de signal (SP)

    -   pour déterminer des valeurs estimatives (f1') pour la séquence d'éléments (f1) à partir de signaux reçus,
    -   pour comparer les valeurs estimatives (f1') avec une séquence de référence (f2),
    -   pour calculer un décalage de fréquence (df) à partir de la comparaison, et

    comprenant un dispositif de commande (SE) pour la synchronisation de fréquence en tenant compte du décalage de fréquence (df).

# Fig.1

(Stand der Technik)

# Fig.2

# Fig.3

# Fig.4

Empfangssignal

Teilnehmer